Europäisches Patentamt

European Patent Office

Office européen des brevets

(19)

(11) **EP 0 967 014 B1**

(12) **FASCICULE DE BREVET EUROPEEN**

(45) Date de publication et mention
de la délivrance du brevet:
**15.03.2006 Bulletin 2006/11**

(51) Int Cl.:
***B01J 29/78*** *(2006.01)*  ***C10G 47/20*** *(2006.01)*

(21) Numéro de dépôt: **99401512.1**

(22) Date de dépôt: **18.06.1999**

(54) **Catalyseur d'hydrocraquage comprenant une zéolite beta et un élément du groupe VB**

Ein einen Beta Zeolith und ein Element der Gruppe VB enthaltender Hydrospaltungskatalysator

Hydrocracking catalyst comprising zeolite Beta and a group VB element

(84) Etats contractants désignés:
**BE DE DK ES FR NL**

(30) Priorité: **25.06.1998 FR 9808040**
**25.06.1998 FR 9808041**

(43) Date de publication de la demande:
**29.12.1999 Bulletin 1999/52**

(73) Titulaire: **Institut Français du Pétrole**
**92500 Rueil Malmaison (FR)**

(72) Inventeurs:
• **Kasztelan, Slavik**
**92500 Rueil Malmaison (FR)**
• **Benazzi, Eric**
**78400 Chatou (FR)**
• **Marchal-George, Nathalie**
**69230 Saint Genis Laval (FR)**

(56) Documents cités:
**EP-A- 0 051 346**   **EP-A- 0 216 443**
**WO-A-95/26928**   **US-A- 4 777 157**

**Description**

La présente invention concerne un catalyseur d'hydrocraquage de charges hydrocarbonées comprenant au moins une zéolithe bêta, au moins une matrice choisie dans le groupe formé par les matrices minérales, de préférence de type oxyde, de préférence amorphe ou mal cristallisée et généralement poreuse, au moins un phase sulfure mixte comprenant du soufre et du niobium ainsi qu'au moins un élément du groupe VIB de ladite classification (groupe 6 selon la nouvelle notation de la classification périodique des éléments: Handbook of Chemistry and Physics, 76ième édition, 1995-1996, intérieur première page de couverture), tels que le chrome, le molybdène ou le tungstène, de préférence le molybdène et le tungstène, de façon encore plus préférée le molybdène. Ce catalyseur comprend en outre au moins un métal du groupe VIII de ladite classification (groupes 8, 9 et 10), tels que le fer, le cobalt, le nickel, le ruthénium, l'osmium, le rhodium, l'iridium, le palladium, le platine, et éventuellement au moins un élément choisi dans le groupe formé par le silicium, le bore ou le phosphore, et éventuellement au moins un élément du groupe VIIA de ladite classification (groupe 17), tel que le fluor, le chlore, le brome, ou l'iode, de préférence le fluor.

La présente invention concerne également les procédés de préparation dudit catalyseur, ainsi que son utilisation pour l'hydrocraquage de charges hydrocarbonées telles que les coupes pétrolières, les coupes issues du charbon contenant des composés aromatiques, et/ou oléfiniques, et/ou naphténiques, et/ou paraffiniques, les dites charges contenant éventuellement des métaux, et/ou de l'azote, et/ou de l'oxygène et/ou du soufre.

L'hydrocraquage de coupes pétrolières lourdes est un procédé très important du raffinage qui permet de produire, à partir de charges lourdes excédentaires et peu valorisables, les fractions plus légères telles que essences, carburéacteurs et gazoles légers que recherche le raffineur pour adapter sa production à la structure de la demande. Certains procédés d'hydrocraquage permettent d'obtenir également un résidu fortement purifié pouvant constituer d'excellente bases pour huiles. Par rapport au craquage catalytique, l'intérêt de l'hydrocraquage catalytique est de fournir des distillats moyens, carburéacteurs et gazoles, de très bonne qualité. L'essence produite présente un indice d'octane beaucoup plus faible que celle issue du craquage catalytique.

Les catalyseurs utilisés en hydrocraquage sont tous du type bifonctionnel associant une fonction acide à une fonction hydrogénante. La fonction acide est apportée par des supports de grandes surfaces (150 à 800 m$^2$.g$^{-1}$ généralement) présentant une acidité superficielle, telles que les alumines halogénées (chlorées ou fluorées notamment), les combinaisons d'oxydes de bore et d'aluminium, les silice-alumines amorphes et les argiles. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI de la classification périodique tels que molybdène et tungstène et au moins un métal du groupe VIII.

L'équilibre entre les deux fonctions acide et hydrogénante est le paramètre fondamental qui régit l'activité et la sélectivité du catalyseur. Une fonction acide faible et une fonction hydrogénante forte donnent des catalyseurs peu actifs, travaillant à température en général élevée (supérieure ou égale à 390 °C), et à vitesse spatiale d'alimentation faible (la VVH exprimée en volume de charge à traiter par unité de volume de catalyseur et par heure est généralement inférieure ou égale à 2) mais dotés d'une très bonne sélectivité en distillats moyens. Inversement, une fonction acide forte et une fonction hydrogénante faible donnent des catalyseurs actifs mais présentant de moins bonnes sélectivités en distillats moyens. La recherche d'un catalyseur convenable sera donc centrée sur un choix judicieux de chacune des fonctions pour ajuster le couple activité/sélectivité du catalyseur.

Ainsi, c'est un des grands intérêts de l'hydrocraquage de présenter une grande flexibilité à divers niveaux : flexibilité au niveau des catalyseurs utilisés, qui amène une flexibilité des charges à traiter et au niveau des produits obtenus. Un paramètre aisé à maîtriser est l'acidité du support du catalyseur.

Les catalyseurs conventionnels de l'hydrocraquage catalytique sont, pour leur grande majorité, constitués de supports faiblement acides, tels les silice-alumines amorphes par exemple. Ces systèmes sont plus particulièrement utilisés pour produire des distillats moyens de très bonne qualité, et encore, lorsque leur acidité est très faible, des bases huiles.

Dans les supports peu acides, on trouve la famille des silice-alumines amorphes. Beaucoup de catalyseurs du marché de l'hydrocraquage sont à base de silice-alumine associée, soit à un métal du groupe VIII soit, de préférence quand les teneurs en poisons hétéroatomiques de la charge à traiter dépassent 0,5 % en poids, à une association de sulfures des métaux des groupes VIB et VIII. Ces systèmes ont une très bonne sélectivité en distillats moyens, et les produits formés sont de bonne qualité. Ces catalyseurs, pour les moins acides d'entre eux, peuvent également produire des bases lubrifiantes. L'inconvénient de tous ces systèmes catalytiques à base de support amorphe est, comme on l'a dit, leur faible activité.

D'autre part, des sulfures simples d'éléments du groupe VB ont été décrits en tant que constituants de catalyseurs d'hydroraffinage de charges hydrocarbonées, comme par exemple le trisulfure de niobium dans le brevet US-A-5.294.333. Des mélanges de sulfures simples comprenant au moins un élément du groupe VB et un élément du groupe VIB ont également été testés comme constituants de catalyseurs d'hydroraffinage de charges hydrocarbonées, comme par exemple dans le brevet US-A-4.910.181, le brevet US-A-5.275.994, ou le brevet US-A-4.777.157.

Les travaux de recherche effectués par le demandeur sur les zéolithes et sur les phases actives hydrogénantes, l'ont conduit à découvrir, de façon surprenante, des catalyseurs d'hydrocraquage de charges hydrocarbonées comprenant ÷

au moins une matrice choisie dans le groupe formé par les matrices minérales, de préférence de type oxyde, de préférence amorphe ou mal cristallisée et généralement poreuse telle que l'alumine, au moins une zéolithe bêta, et au moins une phase sulfure mixte. Ce catalyseur renferme également au moins un élément du groupe VIII, éventuellement un élément choisi dans le groupe formé par le silicium, le phosphore et le bore, éventuellement au moins un élément choisi dans le groupe VIIA.

Le catalyseur selon l'invention renferme au moins une zéolithe bêta, de préférence au moins partiellement sous forme hydrogène. On entend par zéolithe bêta, les zéolithes de type structural BEA telles que décrites dans l'ouvrage « Atlas of Zeolite Structure Types », W.M. Meier, D.H. Olson and Ch. Baerlocher, 4th revised edition, 1996, Elsevier.

Le catalyseur comprend également éventuellement au moins un élément du groupe VIB de ladite classification, tels que le chrome, le molybdène et le tungstène, de préférence le molybdène ou le tungstène, de façon encore plus préférée le molybdène; éventuellement un élément du groupe VIII, c'est-à-dire un élément choisi dans le groupe constitué par : Fe, Ru, Os, Co, Rh, Ir, Ni, Pd, Pt, de préférence le fer, le cobalt, le nickel ou le ruthénium, éventuellement un élément du groupe VIIA, de préférence le fluor. Ledit catalyseur présente une activité en hydrocraquage plus importante que celles des formules catalytiques à base d'élément du groupe VIB connues de l'art antérieur.

La phase sulfure mixte éventuellement présente dans le catalyseur selon l'invention est caractérisée par la formule générale approchée suivante :

$$A_x \, B_{1-x} \, S_y$$

où :

x est un nombre compris entre 0,001 et 0,999, de préférence entre 0,005 et 0,995, de manière plus préférée entre 0,05 et 0,95,

y est un nombre compris entre 0,1 et 8, et de préférence entre 0,1 et 6, et de façon encore plus préférée entre 0,5 et 4,

A est le niobium,

B est un élément choisi dans le groupe VIB, tel que le chrome, le molybdène ou le tungstène, de préférence le molybdène ou le tungstène, de façon encore plus préférée le molybdène.

Le catalyseur selon l'invention est sous forme supportée, c'est-à-dire qu'il comprend au moins un support constitué par au moins une matrice, par exemple de type oxyde; par exemple l'alumine, et au moins une zéolithe bêta.

Le catalyseur de la présente invention peut renfermer généralement en % poids par rapport à la masse totale du catalyseur :

- 0,1 à 99,8%, de préférence de 0,1 à 90%, de manière encore plus préférée de 0,1 à 80%, et de manière très préférée 0,1 à 70% d'au moins une zéolithe bêta,
- 0,1 à 60%, de préférence de 0,1 à 50%, et de manière encore plus préférée de 0,1 à 40%, de niobium,
- 0,1 à 99%, de préférence de 1 à 99 % d'au moins une matrice minérale poreuse amorphe ou mal cristallisée de type oxyde
- 0,1 à 20%, de préférence de 0,1 à 15% et de manière encore plus préférée de 0,1 à 10% d'au moins un élément promoteur choisi dans le groupe constitué par le bore, le phosphore, et le silicium, non compris le silicium éventuellement contenu dans la zéolithe,
- de 0,1 à 50% et de manière encore plus préférée de 0,1 à 40% d'éléments du groupe VIB et du groupe VIII; et

le catalyseur pouvant renfermer en outre :

- de 0 à 20%, de préférence de 0,1 à 15% et de manière encore plus préférée de 0,1 à 10% d'au moins un élément choisi dans le groupe VIIA, de préférence le fluor.

Lorsqu'il est présent, l'élément promoteur silicium est sous forme amorphe et localisé principalement sur la matrice. Le niobium et les éléments du groupe, VIB et du groupe VIII du catalyseur de la présente invention peuvent être présents en totalité ou partiellement sous la forme métallique et/ou oxyde et/ou sulfure.

Lorsqu'il contient une phase sulfure mixte, le catalyseur selon la présente invention renferme généralement en % poids par rapport à la masse totale du catalyseur :

- **-** 0,1 à 99,9 % de préférence 1 à 99,5 % et de manière encore plus préférée 5 à 99,0 % d'au moins une matrice, de préférence de type oxyde, de préférence amorphe ou mal cristallisée et généralement poreuse.
- **-** 0,1 à 99,8%, de préférence 0,1 à 90% et de manière encore plus préférée 0,1 à 80% et de manière très préférée 0,1 à 70% d'au moins une zéolithe bêta, dont le rapport atomique global, silicium/aluminium (Si/Al) est de préférence supérieur à environ 10, de manière plus préférée compris entre 10 et 200, et de manière encore plus préférée entre 10 et 150.
- **-** 0,1 à 99,5 % de préférence 0,5 à 99 % et de manière encore plus préférée 1 à 90 % d'au moins une phase sulfure mixte <u>de niobium</u> et d'au moins un élément du groupe VIB.
- **-** 0,1 à 20% d'au moins un métal du groupe VIII,

<u>le catalyseur pouvant renfermer en outre :</u>

- **-** de 0 à 20 %, de préférence 0 à 15 %, et de manière plus préférée de 0,1 à 15% d'au moins un élément choisi dans le groupe formé par le bore, le phosphore et le silicium, et
- **-** de 0 à 15 %, de préférence 0,1 à 15 % et de manière plus préférée de 0,1 à 10% d'au moins un élément choisi dans le groupe VIIA, de préférence le fluor.

La matrice est de préférence choisi dans le groupe formé par les matrices minérales, de préférence les matrices minérales poreuses, de préférence amorphe ou mal cristallisée, et de préférence de type oxyde.

L'identification de la phase sulfure mixte se fait généralement à partir du diagramme de diffraction des rayons X. Elle peut se faire également à partir de la détermination de la distance métal-métal mesurée par la technique d'absorption des rayons X ou "Extended X-ray Absorption Fine Structure" (EXAFS). Par exemple, dans le cas d'un sulfure mixte de molybdène et de niobium, l'identification par la méthode EXAFS se fait par détermination des distances niobium-niobium ou niobium-molybdène si l'analyse EXAFS est réalisée au seuil K du niobium. Elle peut se faire également par la détermination des distances molybdène-molybdène et molybdène-niobium si l'analyse EXAFS est réalisée au seuil K du molybdène.

Le diagramme de diffraction X est obtenu à l'aide d'un diffractomètre INEL à multidétecteur courbe en utilisant la méthode classique des poudres avec le rayonnement monochromatique K alpha 1 du cuivre. A partir de la position des pics de diffraction représentée par l'angle 2 thêta, on calcule, par la relation de Bragg, les distances réticulaires $d_{hkl}$ caractéristiques de l'échantillon et les paramètres de maille de la phase mixte a et c en Å (1 Å = 1 Angstrôm = $10^{-10}$m $= 0.1$ nm). Le paramètre de maille « a » représente la distance moyenne métal-métal entre deux ions voisins et est caractéristique de l'existence d'une phase mixte. On peut également déterminer le type de structure par diffraction. Ainsi, par exemple, dans le cas d'un sulfure mixte de molybdène et de niobium, les sulfures simples de Mo et Nb, $MoS_2$ et $NbS_2$, existent tous les deux sous la forme de deux types de structure la forme hexagonale 2s et la forme rhomboédrique 3s. Pour les échantillons riches en molybdène (x < 0,5) la phase mixte tend à cristalliser dans le type de structure hexagonale 2s et les paramètres de maille varient linéairement en fonction de la proportion en niobium de la phase mixte comme le montre le tableau 1. Pour les échantillons riches en niobium (x >= 0,5), la phase mixte tend à cristalliser dans la structure rhomboédrique 3s et les paramètres de mailles varient également linéairement en fonction de la composition en niobium comme le montre le tableau 2.

L'estimation de l'erreur de mesure Delta($d_{hkl}$) sur $d_{hkl}$ se calcule, en fonction de l'erreur absolue affectée à la mesure de l'angle 2 thêta, par la relation de Bragg. Une erreur absolue Delta(2 thêta) égale à ± 0,05° est communément admise. L'intensité $I_{rel}$ affectée à chaque valeur de $d_{hkl}$ est mesurée d'après la surface du pic de diffraction correspondant.

**TABLEAU 1**

| Phase | a (Å) | c (Å) |
|---|---|---|
| $MoS_2$-2s | 3,16 | 12,29 |
| $Nb_{0,2}Mo_{0,8}S_2$ | 3,20 | 12,05 |
| $Nb_{0,3}Mo_{0,5}S_2$ | 3,22 | 12,02 |
| $Nb_{0,4}Mo_{0,6}S_2$ | 3,25 | 12,00 |
| $NbS_2$-2s | 3,31 | 11,89 |

**TABLEAU 2**

| Phase | a (Å) | c (Å) |
|---|---|---|
| MoSp-3s | 3,16 | 18,37 |
| $Nb_{0,6}Mo_{0,4}S_2$ | 3,25 | 18,00 |
| $Nb_{0,7}Mo_{0,3}Sa$ | 3,27 | 17,98 |
| $Nb_{0,8}Mo_{0,2}S_2$ | 3,30 | 17,97 |
| $NbS_2$-3s | 3,33 | 17,81 |

Le dépouillement du diagramme de diffraction des rayons X sous la forme des paramètres de maille présentés dans les tableaux 1 et 2 permet d'identifier le sulfure mixte de niobium et de molybdène.

L'analyse par la technique EXAFS est réalisée au seuil K du niobium à l'aide du rayonnement synchrotron entre 18850 et 19800 eV en mesurant l'intensité absorbée par un échantillon de poudre déposé sur une bande adhésive. Le spectre d'absorption est analysé selon une procédure établie (F.W. Lyttle, D.E. Sayers and E.A. Stern, Physical Review B, vol 11, page 4825, 1975 et E.A. Stern, D.E. Sayers and F.W. Lyttle, Physical Review B, vol 11, page 4836) qui permet de déterminer les distances interatomiques.

Le dépouillement du spectre d'adsorption des rayons X permet de déduire une fonction de distribution radiale. Cette distribution radiale montre un premier pic relatif à l'environnement soufré du niobium et dont la position du maximum donne la distance niobium-soufre ou R1 en général de 2,45 à 2,48 Å typique de $NbS_2$. On observe ensuite sur cette distribution radiale un deuxième pic correspondant à la seconde sphère de coordination du niobium composée d'atomes de niobium ou de molybdène que l'on ne peut distinguer du fait de leurs nombres atomiques très voisins et dont la position du maximum donne la distance moyenne R2 métal-métal (niobium-niobium ou niobium-molybdène) dont la valeur varie en fonction de la composition de la phase mixte comme le montre le tableau 3 ; ladite valeur se situe entre les valeurs de la distance niobium-niobium dans $NbS_2$ (3,33 Å) et la distance molybdène-molybdène dans $MoS_2$ (3,16 Å), et elle est généralement en moyenne de 3,20 à 3,35 Å. Cette distance est en accord avec les distances a déterminées par diffraction X et varie avec la composition de la phase mixte. Les distances reportées dans le tableau 3 sont corrigées du décalage de phase et peuvent donc être comparées aux données obtenues par diffraction X. La détermination des distances interatomiques métal-métal par la technique EXAFS est très précise puisque l'estimation de l'erreur absolue sur la distance est égale à $\pm$ 0,02 Å.

**TABLEAU 3**

| Phase | R1 (Å) | R2 (Å) |
|---|---|---|
| $Nb_{0,2}Mo_{0,8}S_2$ | 2,46 | 3,20 |
| $Nb_{0,3}Mo_{0,7}S_2$ | 2,45 | 3,22 |
| $Nb_{0,4}Mo_{0,6}S_2$ | 2,48 | 3,27 |
| $Nb_{0,6}Mo_{0,4}S_2$ | 2,47 | 3,28 |
| $Nb_{0,7}Mo_{0,3}S_2$ | 2,47 | 3,30 |
| $Nb_{0,8}Mo_{0,2}S_2$ | 2,48 | 3,31 |
| $NbS_2$ | 2,48 | 3,33 |

Les catalyseurs selon l'invention peuvent être préparés par toutes les méthodes connues de l'homme du métier.

Un premier procédé préféré de préparation du catalyseur selon la présente invention comprend les étapes suivantes :

a) on sèche et on pèse un solide dénommé le précurseur, renfermant au moins les composés suivants : au moins une matrice, au moins une zéolithe bêta, éventuellement au moins un élément promoteur choisi dans le groupe constitué par le bore, le phosphore, et le silicium, éventuellement au moins un élément choisi parmi les éléments du groupe VIB et du groupe VIII, éventuellement au moins un élément du groupe VIIA, le tout étant de préférence mis en forme,

b) le solide sec obtenu à l'étape a) est calciné à une température d'au moins 150°C, de préférence au moins 450°C.

c) on imprègne le solide précurseur défini à l'étape b), par une solution contenant le niobium,

d) on laisse reposer le solide humide sous une atmosphère humide à une température comprise entre 10 et 120°C,

e) on sèche le solide humide obtenu à l'étape d) à une température comprise entre 60 et 150°C,

f) on calcine le solide séché à l'étape e) sous air sec à une température d'au moins 150°C, de préférence au moins environ 250°C.

Le solide obtenu à l'issue de l'une quelconque des étapes a) à e) peut être imprégné par au moins une solution contenant tout ou partie d'au moins un élément choisi parmi les éléments du groupe VIB et du groupe VIII, éventuellement d'au moins un élément promoteur choisi dans le groupe constitué par le bore, le phosphore et le silicium et éventuellement d'au moins un élément du groupe VIIA.

La préparation du précurseur de l'étape a) ci-dessus peut être réalisée selon toutes les méthodes classiques de l'homme du métier. Selon un procédé de préparation préféré, le précurseur est obtenu par mélange d'au moins une matrice et d'au moins une zéolithe bêta, puis mis en forme, séché et calciné. Le ou les éléments promoteurs choisis dans le groupe constitué par le bore, le phosphore, et le silicium, celui ou ceux choisis parmi les éléments des groupes VIB, VIII, et/ou parmi les éléments du groupe VIIA, sont alors introduits par toute méthode connue de l'homme du métier, à l'une quelconque des étapes a) à e), avant ou après la mise en forme et avant ou après la calcination dudit mélange.

La mise en forme peut être réalisée par exemple par extrusion, par pastillage, par la méthode de la goutte d'huile (oil-drop), par granulation au plateau tournant ou par toute autre méthode bien connue de l'homme du métier. Au moins une calcination peut être effectuée après l'une quelconque des étapes de la préparation, elle est habituellement effectuée sous air à une température d'au moins 150°C, de préférence au moins 300°C. Ainsi, le produit obtenu à l'issue de l'étape a) et/ou de l'étape e) et/ou éventuellement après introduction du ou des éléments choisis parmi les éléments des groupes VIB, VIII, et/ou parmi les éléments promoteurs du groupe constitué par le bore, le phosphore, et le silicium, et/ou parmi les éléments du groupe VIIA, est alors éventuellement calciné sous air, usuellement à une température d'au moins 150°C, de préférence au moins 250°C, de manière plus préférée entre environ 350 et 1000°C.

L'élément hydrogénant peut être introduit à toute étape de la préparation, de préférence lors du mélange, ou de manière très préférée après mise en forme. La mise en forme est suivie d'une calcination, l'élément hydrogénant est introduit avant ou après cette calcination. La préparation se termine dans tous les cas par une calcination à une température de 250 à 600°C. Une des méthodes préférées dans la présente invention consiste à malaxer au moins une zéolithe dans un gel humide d'alumine pendant quelques dizaines de minutes, puis à passer la pâte ainsi obtenue à travers une filière pour former des extrudés de diamètre compris entre 0,4 et 4 mm. La fonction hydrogénante peut être alors introduite en partie seulement (cas, par exemple, des associations d'oxydes de métaux des groupes VIB et VIII) ou en totalité au moment du malaxage de la zéolithe, c'est à dire d'au moins une zéolithe bêta, avec au moins un gel d'oxyde choisi comme matrice. Elle peut être introduite par une ou plusieurs opérations d'échange ionique sur le support calciné constitué d'au moins une zéolithe dispersée dans au moins une matrice, à l'aide de solutions contenant les sels précurseurs des métaux choisis lorsque ceux-ci appartiennent au groupe VIII. Elle peut être introduite par une ou plusieurs opérations d'imprégnation du support mis en forme et calciné, par une solution des précurseurs des oxydes des métaux des groupes VIII (notamment le cobalt et le nickel) lorsque les précurseurs des oxydes des métaux du groupe VIB (notamment le molybdène ou le tungstène) ont été préalablement introduits au moment du malaxage du support. Elle peut enfin être introduite par une ou plusieurs opérations d'imprégnation du support calciné constitué d'au moins une zéolithe bêta et d'au moins une matrice, par des solutions contenant les précurseurs des oxydes de métaux des groupes VIB et/ou VIII, les précurseurs des oxydes de métaux de groupe VIII étant de préférence introduits après ceux du groupe VIB ou en même temps que ces derniers.

Un autre procédé de préparation préféré consiste à introduire dans un mélange d'au moins une matrice avec au moins une zéolithe bêta, avant ou après la mise en forme et avant ou après la calcination dudit mélange, du niobium, et au moins un élément choisi parmi les éléments du groupe VIII et du groupe VIB.

D'une façon préférée, le support est imprégné par une solution aqueuse. L'imprégnation du support est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

Le bore et/ou le phosphore et/ou le silicium et éventuellement l'élément choisi dans le groupe VIIA des ions halogénures, de préférence le fluor, peuvent être introduits dans le catalyseur à divers niveaux de la préparation selon toute technique connue de l'homme de métier.

Une méthode préférée selon l'invention consiste à déposer, par exemple par imprégnation, le ou les éléments promoteurs choisis par exemple le couple bore-silicium sur le précurseur calciné ou non, de préférence calciné. Pour cela on prépare une solution aqueuse d'au moins un sel de bore tel que le biborate d'ammonium ou le pentaborate d'ammonium en milieu alcalin et en présence d'eau oxygénée et on procède à une imprégnation dite à sec, dans laquelle on rempli le volume des pores du précurseur par la solution contenant le bore. Dans le cas où l'on dépose par exemple du silicium, on utilisera, par exemple, une solution d'un composé du silicium de type silicone.

Le dépôt de bore et de silicium peut aussi être réalisé de manière simultanée en utilisant par exemple une solution contenant un sel de bore et un composé du silicium de type silicone. Ainsi, par exemple dans le cas où le précurseur est un catalyseur de type nickel-molybdène supporté sur alumine et zéolithe choisie dans le groupe constitué par les zéolithes bêta, il est possible d'imprégner ce précurseur par de la solution aqueuse de biborate d'ammonium et de silicone Rhodorsil E1 P de la société Rhône Poulenc, de procéder à un séchage par exemple à 80°C, puis d'imprégner par une solution de fluorure d'ammonium, de procéder à un séchage par exemple à 80°C, et de procéder à une calcination par exemple et de façon préférée sous air en lit traversé, par exemple à 500°C pendant 4 heures. On dépose ensuite le niobium selon toute méthode connue de l'homme de métier.

L'élément promoteur choisi dans le groupe formé par le bore, le phosphore et le silicium, et l'élément choisi parmi les halogènes du groupe VIIA, peuvent également être introduits par une ou plusieurs opérations d'imprégnation, par exemple avec excès de solution, sur le précurseur calciné.

Ainsi, par exemple, il est possible d'imprégner le précurseur par une solution aqueuse de biborate d'ammonium et/ou de silicone Rhodorsil E1P de la société Rhône Poulenc de procéder à un séchage par exemple à 80°C, puis d'imprégner par une solution de fluorure d'ammonium, de procéder à un séchage par exemple à 80°C, et de procéder à une calcination par exemple et de façon préférée sous air en lit traversé, par exemple à 500°C pendant 4 heures. On dépose ensuite le niobium selon toute méthode connue de l'homme de métier.

D'autres séquences d'imprégnation peuvent être mise en oeuvre pour obtenir le catalyseur de la présente invention.

Il est par exemple possible d'imprégner le précurseur avec une solution contenant un des éléments promoteurs (B, P, Si), de sécher, de calciner puis d'imprégner le solide obtenu avec la solution contenant un autre élément promoteur, de sécher, de calciner. Il est aussi possible d'imprégner le précurseur avec une solution contenant deux des éléments promoteurs, de sécher, de calciner puis d'imprégner le solide obtenu avec la solution contenant un autre élément promoteur, de sécher, et de procéder à une calcination finale. On dépose ensuite le niobium selon toute méthode connue de l'homme de métier.

L'imprégnation du niobium peut être facilitée par ajout d'acide oxalique et éventuellement d'oxalate d'ammonium dans les solutions de d'oxalate de niobium. D'autres composés peuvent être utilisés pour améliorer la solubilité et faciliter l'imprégnation du niobium comme il est bien connu de l'homme du métier.

La sulfuration peut se faire par toute méthode connue de l'homme du métier. La méthode préférée selon l'invention consiste à chauffer le catalyseur non calciné sous flux d'un mélange hydrogène-hydrogène sulfuré ou sous flux d'un mélange azote-hydrogène sulfuré ou encore sous hydrogène sulfuré pur à une température comprise entre 150 et 800°C, de préférence entre 250 et 600°C, généralement dans une zone réactionnelle à lit traversé.

Le catalyseur selon l'invention peut être préparé soit en préparant dans un premier temps la phase sulfure mixte massique et en la déposant ensuite sur un support, soit en générant directement un précurseur du catalyseur consistant en une phase sulfure mixte supportée. Les éléments optionnels éventuellement présents (éléments choisi dans le groupe formé par le silicium, le phosphore et le bore, éléments du groupe VIIA) peuvent être introduit à toute étape de la préparation, par exemple lors de la préparation de la phase sulfure mixte massique ou supportée, ou bien sur le support seul.

Un procédé préféré de préparation de la phase sulfure mixte massique comprise dans le catalyseur selon la présente invention comprend les étapes suivantes :

a) on formé un mélange réactionnel qui renferme au moins les composés suivants : au moins une source de niobium, au moins une source d'élément du groupe VIB, éventuellement de l'eau, au moins une source d'un élément choisi dans le groupe formé par les éléments du groupe VIII, éventuellement au moins une source d'un élément choisi dans le groupe formé par le silicium, le phosphore et le bore, éventuellement un élément choisi parmi les halogènes, c'est-à-dire les éléments du groupe VIIA, de préférence le fluor,

b) on maintient ledit mélange à une température de chauffage généralement supérieure à environ 40°C, à une pression au moins égale à la pression atmosphérique et en présence d'un composé du soufre jusqu'à ce que l'on obtienne ladite phase sulfure mixte.

Le mélange réalisé à l'étape a) ci-dessus peut être réalisé simultanément ou successivement, l'ordre important peu, dans le même espace physique ou séparément.

L'étape b) se révèle être très difficile par la plupart des méthodes classiques de sulfuration connues de l'homme du métier.

En effet, la sulfuration des solides contenant du niobium sous forme oxyde se révèle être très difficile par la plupart des méthodes classiques de sulfuration connues de l'homme du métier. Les catalyseurs contenant du niobium supporté sur une matrice du type alumine sont connus pour être très difficiles à sulfurer, une fois que l'association niobium-matrice a été calcinée à une température supérieure à 200°C.

Une méthode préférée selon l'invention, consiste à ne pas calciner le catalyseur et à procéder à la sulfuration par un composé gazeux comprenant le soufre tel que $CS_2$ en autoclave sous pression. Ainsi, une méthode préférée selon l'invention consiste à procéder à la sulfuration du mélange, généralement sous forme de solides en poudre, à une température comprise entre 40 et 700°C, de préférence entre 60 et 500°C, sous pression autogène et en présence d'un composé gazeux du soufre tel que de préférence le $CS_2$.

On utilise de préférence un autoclave intérieurement revêtu d'un matériau polymère, en général du polytétrafluoroéthylène, à une température supérieure à 100°C. La durée du chauffage du mélange réactionnel nécessaire à la sulfuration dépend de la composition du mélange réactionnel et de la température de réaction. Une telle méthode, décrite dans la littérature pour la synthèse d'un catalyseur comprenant du sulfure de niobium sur alumine (Journal of Catalysis, vol. 156, pages 279-289 (1995)) et dans le brevet EP-A-440.516 pour la synthèse d'un composé binaire du soufre, c'est-à-dire d'un sulfure simple comprenant du soufre et un autre élément, métal de transition ou terre rare, a été trouvée applicable pour la synthèse des sulfures mixtes selon la présente invention.

Les catalyseurs supportés de la présente invention peuvent être préparés par toute méthode connue de l'homme du métier. Quelques unes des méthodes de préparation possibles sont décrites ci-après.

En général, il est possible de mélanger mécaniquement la zéolithe bêta et la matrice généralement sous forme de poudre avec tout précurseur de la phase sulfure mixte, puis de procéder à la sulfuration, ainsi qu'il est décrit plus en détail ci-après. Il est également possible de réaliser un mélange mécanique comprenant d'une part de la poudre du sulfure mixte, synthétisé selon l'une des méthodes décrites précédemment, et d'autre part du support (c'est-à-dire un mélange de matrice et de zéolithe) également sous forme de poudre, puis éventuellement de procéder à une mise en forme.

Dans tous les cas il est a priori possible d'ajouter les éléments éventuels présents sur le catalyseur supporté selon l'invention à toute étape de la préparation, selon les méthodes connues de l'homme du métier.

Un des procédés préféré de préparation de la phase sulfure mixte supportée comprise dans le catalyseur selon l'invention comprend les étapes suivantes :

a) on forme un mélange réactionnel qui renferme au moins les composés suivants : au moins une matrice choisie dans le groupe formé par les matrices minérales, de préférence de type oxyde, de préférence amorphe ou mal cristallisée et généralement poreuse, au moins une zéolithe bêta, au moins une source de niobium, au moins une source d'élément du groupe VIB, éventuellement de l'eau, éventuellement au moins un élément choisi dans le groupe formé par les éléments du groupe VIII, éventuellement au moins une source d'un élément choisi dans le groupe formé par le silicium, le phosphore et le bore, éventuellement au moins une source d'un élément choisi parmi les halogènes, c'est-à-dire les éléments du groupe VIIA, de préférence le fluor,

b) on maintient ledit mélange à une température de chauffage généralement supérieure à environ 40°C en présence d'un composé du soufre jusqu'à ce que l'on obtienne un solide contenant au moins une matrice, au moins une zéolithe bêta et au moins une phase sulfure mixte.

De préférence l'étape a) est une étape d'imprégnation du support.

Ainsi, par exemple dans le cas préféré où le métal du groupe VIB est le molybdène, il est possible d'imprégner le support (comprenant la matrice et la zéolithe) ou la matrice seule, par exemple de l'alumine, par de l'heptamolybdate d'ammonium, de procéder à un séchage à 80°C, puis d'imprégner par de l'oxalate de niobium, de procéder à un séchage à 80°C, et de procéder à une sulfuration par exemple et de façon préférée par $CS_2$ en autoclave sous pression autogène, ainsi que décrit pour la préparation de la phase sulfure mixte massique, par exemple à 400°C pendant 10 heures.

Il est encore possible de réaliser le mélange de poudres comprenant la source de niobium, la source d'élément du groupe VIB, éventuellement de l'eau, éventuellement la source de l'élément choisi parmi le silicium, le phosphore et le bore, éventuellement la source de l'élément du groupe VIIA et éventuellement la source de soufre et d'imprégner le support. Il est également possible d'imprégner la matrice seule et d'ajouter la zéolithe bêta par la suite, par tout moyen connu de l'homme du métier, par exemple par mélange mécanique.

Lorsque la matrice est imprégnée, l'imprégnation de la matrice est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

La mise en forme du support ou du catalyseur supporté selon l'invention peut être une extrusion, un pastillage, la méthode de la goutte d'huile (oil-drop), une granulation au plateau tournant ou toute autre méthode bien connue de l'homme du métier. Le support préformé est éventuellement calciné sous air, usuellement à une température d'au moins 300°C, couramment d'environ 350 à 1000°C.

La phase sulfure mixte, de même que l'élément du groupe VIII, de même que l'élément choisi dans le groupe formé par P, B et Si et l'élément choisi dans le groupe VIIA des halogénures, de préférence le fluor, peuvent être introduits dans le catalyseur à divers niveaux de la préparation et de diverses manières.

La phase sulfure mixte peut être introduite en partie seulement (cas par exemple de l'association d'au moins un métal du groupe VIB, du niobium et d'au moins un métal du groupe VIII) ou en totalité au moment du malaxage de la matrice poreuse, éventuellement avec tout ou partie de la zéolithe.

Le métal du groupe VIII de même que l'élément choisi dans le groupe formé par P, B, Si et l'élément choisi parmi les halogénures du groupe VIIA, peuvent être introduits par une ou plusieurs opérations d'échange ionique sur la matrice calcinée constituée du sulfure mixte dispersé dans le support choisi, à l'aide d'une solution contenant au moins un sel précurseur de métal du groupe VIII. Elle peut être introduite par au moins une opération d'imprégnation du support mis en forme et calciné, par une solution de précurseur d'au moins un métal du groupe VIII (notamment le cobalt et/ou le nickel), tout précurseur de métal du groupe VIII étant de préférence introduit en même temps ou après tout précurseur de métal du groupe VIB et du niobium.

Dans le cas où des métaux sont introduits en plusieurs imprégnations, des sels précurseurs correspondants, une étape de séchage intermédiaire du catalyseur est généralement effectuée à une température généralement comprise entre 60 et 200°C.

Le catalyseur de la présente invention renferme un élément (métal) du groupe VIII tel que fer, cobalt, nickel, ruthénium, rhodium, palladium, osmium, iridium ou platine. Parmi les éléments du groupe VIII on emploie de préférence un élément choisi dans le groupe formé par le fer, le cobalt, le nickel et le ruthénium. D'une manière avantageuse on utilise les associations d'éléments suivantes : nickel-niobium-molybdène, cobalt-niobium-molybdène, fer-niobium-molybdène, nickel-niobium-tungstène, cobalt-niobium-tungstène, fer-niobium-tungstène, les associations préférés étant : nickel-niobium-molybdène, cobalt-niobium-molybdène. Il est également possible d'utiliser des associations de quatre éléments par exemple nickel-cobalt-niobium-molybdène. On peut également utiliser des associations contenant un métal noble tel que ruthénium-niobium-molybdène, ou encore ruthénium-nickel-niobium-molybdène.

Dans le cas où les éléments sont introduits en plusieurs imprégnations des sels précurseurs correspondants, une étape de calcination intermédiaire du catalyseur devra généralement être effectuée à une température comprise entre 250 et 600 °C. L'imprégnation du molybdène peut être facilitée par ajout d'acide phosphorique dans les solutions de paramolybdate d'ammonium, ce qui permet d'introduire aussi le phosphore de façon à promouvoir l'activité catalytique. D'autres composés du phosphore peuvent être utilisés comme il est bien connu de l'homme du métier.

La matrice minérale poreuse, habituellement amorphe ou mal cristallisée, est en général constituée d'au moins un oxyde réfractaire sous forme amorphe ou mal cristallisé. Ladite matrice est habituellement choisie dans le groupe formé par l'alumine, la silice, la silice-alumine, ou un mélange d'aux moins deux des oxydes cités ci dessus. On peut choisir également les aluminates. On préfère utiliser des matrices contenant de l'alumine, sous toutes ces formes connues de l'homme du métier, par exemple l'alumine gamma.

Les sources de niobium qui peuvent être utilisées sont bien connues de l'homme du métier. Par exemple, parmi les sources de niobium, on peut utiliser les oxydes, tel que le pentaoxyde de diniobium $Nb_2O_5$, l'acide niobique $Nb_2O_5.H_2O$, les hydroxydes de niobium et les polyoxoniobates, les alkoxydes de niobium de formule $Nb(OR_1)_3$ où $R_1$ est un radical alkyle, l'oxalate de niobium $NbO(HC_2O_4)_5$, le niobate d'ammonium. On utilise de préférence l'oxalate de niobium ou le niobate d'ammonium.

Parmi les zéolithes bêta on préfère habituellement employer des zéolithes bêta dont le rapport atomique global, silicium/aluminium (Si/Al) est supérieur à environ 10 et de manière plus préférée des zéolithes bêta dont le rapport Si/Al est compris entre 10 et 200, et de manière encore plus préférée entre 10 et 150. Ces zéolithes bêta peuvent être obtenues à la synthèse ou en utilisant toute technique de désalumination post-synthèse connue de l'homme du métier.

On emploie avantageusement des zéolithes bêta, soit entièrement sous forme hydrogène, soit éventuellement partiellement échangée avec des cations métalliques, par exemple des cations des métaux alcalins ou alcalino terreux et/ou des cations de terre rares de numéro atomique 57 à 71 inclus (Zeolite Molecular Sieves Structure, Chemistry and Uses, D.W. Breck, J. Willey and sons, 1973). Le rapport atomique cation/Al est en général inférieur à 0,8, de préférence inférieur à 0,5 et de manière encore plus préférée inférieur à 0,1. Les zéolithes bêta selon l'invention présentent de préférence une surface spécifique déterminée par la méthode B.E.T. supérieure à environ 400 m2/g, et de manière plus préférée comprise entre 450 et 850 m2/g.

La source de soufre peut être le soufre élémentaire, le sulfure de carbone, l'hydrogène sulfuré, les hydrocarbures soufrés tels que le diméthyl sulfure, le diméthyl disulfure, les mercaptans, les composés du thiophène, les thiols, les polysulfures tels que par exemple le ditertiononylpolysulfure ou TPS-37 de la société ATOCHEM, les coupes pétrolières riches en soufre telles que l'essence, le kérosène, le gazole, seuls ou en mélanges avec un des composés soufrés cité ci-dessus. La source de soufre préférée est le sulfure de carbone ou l'hydrogène sulfuré.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

De nombreuses sources de silicium peuvent être employées. Ainsi, on peut utiliser l'orthosilicate d'éthyle Si $(OEt)_4$, les siloxanes, les polysiloxanes, les silicones, les émulsions de silicones, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut également être ajouté par exemple par imprégnation d'un composé du silicium de type silicone mis en suspension dans l'eau.

La source de bore peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple au moyen d'une solution d'acide borique dans un mélange eau/alcool.

Les sources d'éléments du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF_4$ ou de sodium $Na_2SiF_6$. Le fluor peut être introduit par exemple par imprégnation d'une solution aqueuse d'acide fluorhydrique ou de fluorure d'ammonium.

Les sources d'éléments du groupe VIB qui peuvent être utilisées sont bien connues de l'homme du métier. Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels. On utilise de préférence les oxydes et les sels d'ammonium tels que le molybdate d'ammonium, l'heptamolybdate d'ammonium et le tungstate d'ammonium.

Les sources d'éléments du groupe VIII qui peuvent être utilisées sont bien connues de l'homme du métier. Par exemple, pour les métaux non nobles on utilisera les nitrates, les sulfates, les phosphates, les halogénures par exemple, chlorures, bromures et fluorures, les carboxylates par exemple acétates et carbonates. Pour les métaux nobles on utilisera les halogénures, par exemple les chlorures, les nitrates, les acides tels que l'acide chloroplatinique, les oxychlorures tels que l'oxychlorure ammoniacal de ruthénium.

Les catalyseurs selon la présente invention sont mise en forme sous la forme de grains de différentes forme et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudre concassées, de tablettes, d'anneaux, de billes, de roues. Ils présentent une surface spécifique mesurée par adsorption d'azote selon la méthode BET (Brunauer, Emmett, Teller, J. Am. Chem. Soc., vol. 60, 309-316 (1938)) comprise entre environ 50 et environ 600 $m^2/g$, un volume poreux mesuré par porosimétrie au mercure compris entre environ 0,2 et environ 1,5 $cm^3/g$ et une distribution en taille de pores pouvant être monomodale, bimodale ou polymodale.

Les catalyseurs selon la présente invention sont utilisés pour l'hydrocraquage de charges hydrocarbonées telles que les coupes pétrolières. Les charges employées dans le procédé sont des essences, des kérosènes, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges. Elles contiennent des hétéroatomes tels que soufre, oxygène et azote et éventuellement des métaux.

Les catalyseurs ainsi obtenus sont utilisés avantageusement pour l'hydrocraquage en particulier de coupes hydrocarbonées lourdes de type distillats sous vide, résidus désasphaltés ou hydrotraités ou équivalents. Les coupes lourdes sont de préférence constituées d'au moins de 80% en volume de composés dont les points d'ébullition sont d'au moins 350°C et de préférence compris entre 350 et 580 °C (c'est-à-dire correspondant à des composés contenant au moins 15 à 20 atomes de carbone). Elles contiennent généralement des hétéroatomes tels que soufre et azote. La teneur en azote est usuellement comprise entre 1 et 5000 ppm poids et la teneur en soufre entre 0,01 et 5% poids.

Les conditions de l'hydrocraquage telles que température, pression, taux de recyclage d'hydrogène, vitesse volumique horaire, pourront être très variables en fonction de la nature de la charge, de la qualité des produits désirés et des installations dont dispose le raffineur. La température est en général supérieure à 200°C et préférentiellement comprise entre 250°C et 480°C. La pression est supérieure à 0,1 MPa et préférentiellement supérieure à 1 MPa. La quantité d'hydrogène est au minimum de 50 et souvent comprise entre 80 et 5000 normaux litres d'hydrogène par litre de charge. La vitesse volumique horaire est comprise en général entre 0,1 et 20 volume de charge par volume de catalyseur et par heure.

Les catalyseurs de la présente invention sont éventuellement soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature soit in-situ, c'est-à-dire dans le réacteur d'hydrocraquage, soit ex-situ.

Une méthode de sulfuration classique bien connue de l'homme du métier consiste à chauffer en présence d'hydrogène sulfuré à une température comprise entre 150 et 800°C, de préférence entre 250 et 600°C, généralement dans une zone réactionnelle à lit traversé.

Le catalyseur de la présente invention peut être avantageusement employé pour l'hydrocraquage de coupes de type distillats sous vide fortement chargée en soufre et azote plus particulièrement par exemple, les coupes à teneur en soufre supérieure à 0, 1 % poids et à teneur en azote supérieure à 10 ppm.

Dans un premier mode de réalisation ou d'hydrocraquage partiel encore appelé hydrocraquage doux, le niveau de conversion est inférieur à 55%. Le catalyseur selon l'invention est alors employé à une température en général supérieure ou égale à 230°C, de préférence comprise entre 300°C et 480°C, et de manière plus préférée comprise entre 350°C et 450°C. La pression préférentiellement supérieure à 2MPa, de manière plus préférée 3MPa, et préférentiellement inférieure à 12MPa, de manière plus préférée inférieure à 10MPa. La quantité d'hydrogène est au minimum de 100 normaux litres d'hydrogène par litre de charge, et préférentiellement comprise entre 200 et 3000 normaux litre d'hydrogène par litre de charge. La vitesse volumique horaire est préférentiellement comprise entre 0,15 et 10 volume de charge par volume de catalyseur et par heure. Dans ces conditions, les catalyseurs de la présente invention présentent une meilleure activité en conversion, en hydrodésulfuration et en hydrodéazotation que les catalyseurs commerciaux.

Dans un deuxième mode de réalisation, le catalyseur de la présente invention peut être employé pour l'hydrocraquage partiel, avantageusement dans des conditions de pression d'hydrogène modérée, de coupes par exemple de type distillats sous vide fortement chargées en soufre et azote qui ont été préalablement hydrotraitées. Dans ce mode d'hydrocraquage le niveau de conversion est inférieur à 55%. Dans ce cas le procédé de conversion de coupe pétrolière se déroule en deux étapes, les catalyseurs selon l'invention étant utilisés dans la deuxième étape. Le catalyseur de la première étape a une fonction d'hydrotraitement et comprend une matrice de préférence à base d'alumine, et de préférence ne contenant pas de zéolithe, et au moins un métal ayant une fonction hydrogénante. Ladite matrice est une matrice minérale poreuse amorphe ou mal cristallisée de type oxyde. On peut citer à titre d'exemple non limitatif les alumines, les silices, les silice-alumine. On peut choisir également les aluminates. On préfère utiliser des matrices contenant de l'alumine, sous toutes ces formes connues de l'Homme du métier, et de manière encore plus préférée les alumines, par exemple l'alumine gamma. La fonction d'hydrotraitement est assurée par au moins un métal ou composé de métal du groupe VIII tels que le nickel et le cobalt notamment. On peut utiliser une combinaison d'au moins un métal ou composé de métal du groupe VIB (par exemple le molybdène ou le tungstène) et d'au moins un métal ou composé de métal du groupe VIII (par exemple le cobalt ou le nickel) de la classification périodique des éléments. La concentration totale en oxydes de métaux des groupes VIB et VIII est préférentiellement comprise entre 5 et 40 % en poids et de manière plus préférée entre 7 et 30 % en poids et le rapport pondéral exprimé en oxyde du métal (des métaux) du groupe VIB sur oxyde du métal (des métaux) du groupe VIII est préférentiellement compris entre 1,25 et 20, et de manière plus préférée entre 2 et 10.

De plus, ce catalyseur peut contenir du phosphore. La teneur en phosphore, exprimée en concentration en pentaoxyde de diphosphore $P_2O_5$ sera préférentiellement d'au plus 15%, de manière plus préférée comprise entre 0,1 et 15 % en poids et de manière très préférée comprise entre 0,15 et 10% en poids. Il peut également contenir du bore dans un rapport B/P préférentiellement compris entre 1,05 et 2 (atomique), la somme des teneurs en bore (B) et phosphore (P) exprimée en oxydes étant préférentiellement comprise entre 5 et 15 % poids.

La première étape se déroule généralement à une température comprise entre 350 et 460°C, de préférence entre 360 et 450°C, une pression totale d'au moins 2MPa, de préférence au moins 3 MPa, une vitesse volumique horaire comprise entre de 0,1 et 5 volume de charge par volume de catalyseur et par heure, de préférence entre 0,2 et 2 volume de charge par volume de catalyseur et par heure et avec une quantité d'hydrogène d'au moins 100 normaux litres par litre de charge, et de préférence comprise entre 260 et 3000 normaux litres par litre de charge.

Pour l'étape de conversion avec le catalyseur selon l'invention (ou seconde étape), les températures sont en général supérieures ou égales à 230°C et souvent comprises entre 300°C et 480°C et de manière préférée entre 300 et 450°C. La pression est en général d'au moins 2MPa et de préférence d'au moins 3MPa. La quantité d'hydrogène est au minimum de 100 normaux litres d'hydrogène par litre de charge et préférentiellement comprise entre 200 et 3000 litres d'hydrogène par litre de charge. La vitesse volumique horaire est préférentiellement comprise entre 0,15 et 10 volume de charge par volume de catalyseur et par heure. Dans ces conditions, les catalyseurs de la présente invention présentent une meilleure activité en conversion, en hydrodésulfuration, en hydrodéazotation et une meilleure sélectivité en distillats moyens que les catalyseurs commerciaux. La durée de vie des catalyseurs est également améliorée dans la plage de pression modérée.

Dans un autre mode de réalisation, le catalyseur de la présente invention peut être employé pour l'hydrocraquage dans des conditions de pression d'hydrogène élevées, en général d'au moins 5 MPa. Les coupes traitées sont par exemple de type distillats sous vide fortement chargée en soufre et azote qui ont été préalablement hydrotraitées. Dans ce mode d'hydrocraquage le niveau de conversion est supérieur à 55%. Dans ce cas, le procédé de conversion de coupe pétrolière se déroule en deux étapes, le catalyseur selon l'invention étant utilisé dans la deuxième étape.

Le catalyseur de la première étape a une fonction d'hydrotraitement et comprend une matrice de préférence à base d'alumine, et de préférence ne contenant pas de zéolithe, et au moins un métal ayant une fonction hydrogénante. Ladite matrice peut également être constituée de, ou renfermer, de la silice, de la silice-alumine, de l'oxyde de bore, de la magnésie, de la zircone, de l'oxyde de titane ou une combinaison de ces oxydes. La fonction hydro-deshydrogénante est assurée par au moins un métal ou composé de métal du groupe VIII tels que le nickel et le cobalt notamment. On peut utiliser une combinaison d'au moins un métal ou composé de métal du groupe VIB (par exemple le molybdène ou le tungstène) et d'au moins un métal ou composé de métal du groupe VIII (par exemple le cobalt ou le nickel) de la classification périodique des éléments. La concentration totale en oxydes de métaux des groupes VIB et VIII est préférentiellement comprise entre 5 et 40 % en poids et de manière plus préférée entre 7 et 30 % en poids et le rapport pondéral exprimé en oxyde métallique en métal (ou métaux) du groupe VIB sur métal (ou métaux) du groupe VIII est préférentiellement compris entre 1,25 et 20 et de manière plus préférée entre 2 et 10. De plus, ce catalyseur peut éventuellement contenir du phosphore. La teneur en phosphore, exprimée en concentration en pentaoxyde de diphosphore $P_2O_5$ sera préférentiellement d'au plus 15% de manière plus préférée comprise entre 0,1 et 15 % en poids et de manière très préférée comprise entre 0,15 et 10% en poids. Il peut également contenir du bore dans un rapport B/P préférentiellement compris entre 1,02 et 2 (atomique), la somme des teneurs en bore (B) et en phosphore (P) exprimée en oxydes étant préférentiellement comprise entre 5 et 15 % poids.

La première étape se déroule généralement à une température comprise entre 350 et 460°C, de préférence entre 360 et 450°C, une pression d'au moins 2MPa, de préférence d'au moins 3MPa, une vitesse volumique horaire comprise entre 0,1 et 5 volume de charge par volume de catalyseur et par heure, de préférence entre 0,2 et 2 volume de charge par volume de catalyseur et par heure et avec une quantité d'hydrogène d'au moins 100 normaux litres d'hydrogène par litre de charge, et de préférence comprise entre 260 et 3000 normaux litres d'hydrogène par litre de charge.

Pour l'étape de conversion avec le catalyseur selon l'invention (ou seconde étape), les températures sont en général supérieures ou égales à 230°C, souvent comprises entre 300°C et 480°C , et de manière préférée entre 330°C et 440°C. La pression est en général supérieure à 5MPa et de préférence supérieure à 7MPa. La quantité d'hydrogène est au minimum de 100 normaux litres d'hydrogène par litre de charge et préférentiellement comprise entre 200 et 3000 litres d'hydrogène par litre de charge.

La vitesse volumique horaire est préférentiellement comprise entre 0,15 et 10 volume de charge par volume de catalyseur et par heure.

Dans ces conditions, les catalyseurs de la présente invention présentent une meilleure activité en conversion que les catalyseurs commerciaux.

Les exemples suivants illustrent la présente invention sans toutefois en limiter la portée.

Exemple 1 : Préparation d'un support contenant une zéolithe bêta

Un support de catalyseur d'hydrocraquage contenant une zéolithe bêta a été fabriqué en grande quantité de façon à pouvoir préparer différents catalyseurs à base du même support. Pour cela on utilise 18,9 % poids d'une zéolithe bêta possédant un rapport Si/Al global (mesuré par fluorescence X) de 23,1, un rapport atomique mesuré par adsorption atomique de Na/Al=0,003, une surface BET de 720 m2/g et un volume poreux de 0,298ml d'azote liquide/g (à la température de l'azote liquide) à P/Po=0,14, que l'on mélange à 81,1 % poids d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 286 m2/g, un volume poreux de 0,39 cm3/g et une distribution en taille de pore monomodale centrée sur 11 nm. L'analyse de la matrice par la diffraction des rayons X révèle que celle ci est composée d'alumine gamma cubique de faible cristallinité et de zéolithe bêta.

Exemple 2 : Préparation de catalyseurs d'hydrocraquage contenant une zéolithe bêta (non conforme à l'invention)

Les extrudés de support contenant une zéolithe bêta de l'exemple 1 sont imprégnés à sec par une solution aqueuse d'un mélange d'heptamolybdate d'ammonium et de nitrate de nickel, séchés une nuit à 120°C sous air et enfin calcinés sous air à 550°C.

Les teneurs pondérales en oxydes du catalyseur K (NiMo) obtenus sont indiquées dans le tableau 1.

Nous avons imprégné l'échantillon de catalyseur NiMo par une solution aqueuse renfermant du l'émulsion de silicone Rhodorsil EP1 de manière à déposer environ 1,6% en masse de $SiO_2$. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé L (NiMoSi).

Les extrudés de support contenant une zéolithe bêta de l'exemple 1 sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Le catalyseur NiMoP est ainsi obtenu.

Nous avons imprégné l'échantillon de catalyseur NiMoP par une solution aqueuse renfermant du biborate d'ammonium et de l'émulsion de silicone Rhodorsil EP1 de manière à déposer environ 1,7% masse de $B_2O_3$ et 1,5% en masse de $SiO_2$. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé M (NiMoPBSi).

Les teneurs finales en oxydes des catalyseurs NiMo sont indiquées dans le tableau 1.

Tableau 1 : Caractéristiques des catalyseurs NiMo

| Catalyseur | K (-) | L (Si) | M (PBSi) |
|---|---|---|---|
| $MoO_3$ (% pds) | 14,2 | 13,9 | 13,2 |
| NiO (% pds) | 3,5 | 3,4 | 3,3 |
| $P_2O_5$ (% pds) | 0 | 0 | 4,1 |
| $B_2O_3$ (% pds) | 0 | 0 | 1,7 |
| $SiO_2$ (% pds) | 15,0 | 16,3 | 15,2 |
| Complément à 100% composé majoritairement de $Al_2O_3$ (% pds) | 67,3 | 66,4 | 62,5 |
| Zéolite bêta (% pds) | 15,5 | 15,3 | 14,4 |

Exemple 3: Préparation de catalyseurs d'hydrocraquage contenant une zéolithe bêta et du niobium (non conforme à l'invention)

Les extrudés de support contenant une zéolithe bêta de l'exemple 1 sont imprégnés par une solution aqueuse d'oxalate de niobium $Nb(HC_2O_4)_5$, d'acide oxalique et d'oxalate d'ammonium. La solution aqueuse contenant le niobium est préparée à partir de 1330 ml d'eau dans laquelle on dissous 33g d'acide oxalique, 37,2 g d'oxalate d'ammonium et 92,3 g d'oxalate de niobium. Pour préparer la solution, on dissous dans un premier temps le mélange acide oxalique et oxalate d'ammonium et lorsque la solution est limpide on chauffe la dite solution à 55°C et on ajoute l'oxalate de niobium. On complète ensuite en eau pour obtenir 1330 ml de solution. Le support de l'exemple 1 ci dessus est imprégné par la méthode dite avec excès de solution. Les 1330 ml de solution sont mis en contact avec 380 g de catalyseur. Ceci permet de déposer environ 5% poids de Nb sur le catalyseur. A bout de deux heures on récupère les extrudés. Ceux-ci sont ensuite séchés une nuit à 120°C sous un courant d'air sec, et enfin calcinés sous air sec à 550°C.

Les extrudés séchés sont imprégnés à sec par une solution aqueuse d'un mélange d'heptamolybdate d'ammonium et de nitrate de nickel, séchés une nuit à 120°C sous air et enfin calcinés sous air à 550°C. Les teneurs pondérales en oxydes du catalyseur Q (Nb) obtenus sont indiquées dans le tableau 2.

Nous avons imprégné l'échantillon de catalyseur Q par une solution aqueuse renfermant du l'émulsion de silicone Rhodorsil EP1 de manière à déposer environ 1,6% en masse de $SiO_2$. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé R (NbSi).

Les extrudés de support contenant une zéolithe bêta et du niobium préparés ci-dessus sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Un catalyseur NbNiMoP est ainsi obtenu.

Nous avons imprégné l'échantillon de catalyseur NbNiMoP par une solution aqueuse renfermant du biborate d'ammonium et de l'émulsion de silicone Rhodorsil EP1 de manière à déposer environ 1,7% masse de $B_2O_3$ et 1,5% en masse de $SiO_2$.

Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé T (NbPBSi).

Les teneurs finales en oxydes des catalyseurs NbNiMo sont indiquées dans le tableau 2.

Tableau 2 : Caractéristiques des catalyseurs NbNiMo

| Catalyseur | Q (Nb) | R (NbSi) | T (NbPBSi) |
|---|---|---|---|
| $Nb_2O_5$ (% pds) | 4,85 | 4,8 | 4,7 |
| $MoO_3$ (% pds) | 13,5 | 13,3 | 12,6 |
| NiO (% pds) | 3,3 | 3,2 | 3,1 |
| $P_2O_5$ (% pds) | 0 | 0 | 3,9 |
| $B_2O_3$ (%pds) | 0 | 0 | 1,6 |
| $SiO_2$ (% pds) | 14,2 | 15,5 | 14,5 |
| Complément à 100% composé majoritairement de $Al_2O_3$ (% pds) | 64,1 | 63,1 | 59,5 |
| Zéolite bêta (% pds) | 14,8 | 14,6 | 13,6 |

Exemple 4 : Préparation d'un catalyseur d'hydrocraquage contenant une zéolithe bêta et une phase sulfure mixte (conforme à l'invention)

Les extrudés de support contenant une zéolithe bêta de l'exemple 1 sont imprégnés à sec par une solution aqueuse d'un mélange d'heptamolybdate d'ammonium et de nitrate de nickel, séchés une nuit à 120°C sous air. Les teneurs pondérales en oxydes du catalyseur A obtenus sont indiquées dans le tableau 3.

Le catalyseur A est imprégné par une solution aqueuse d'oxalate de niobium $Nb(HC_2O_4)_5$, d'acide oxalique et d'oxalate d'ammonium. La solution aqueuse contenant le niobium est préparée à partir de 1330 ml d'eau dans laquelle on dissous 33g d'acide oxalique, 37,2 g d'oxalate d'ammonium et 92,3 g d'oxalate de niobium. Pour préparer la solution, on dissous dans un premier temps le mélange acide oxalique et oxalate d'ammonium et lorsque la solution est limpide on chauffe la dite solution à 55°C et on ajoute l'oxalate de niobium. On complète ensuite en eau pour obtenir 1330 ml de solution. Le support de l'exemple 1 ci dessus est imprégné par la méthode dite avec excès de solution. Les 1330 ml de solution sont mis en contact avec 380 g de catalyseur. Ceci permet de déposer environ 5% poids de Nb sur le catalyseur. A bout de deux heures on récupère les extrudés. Ceux-ci sont ensuite séchés une nuit à 120°C sous un courant d'air sec. Le catalyseur B obtenu contient en particulier 14,8 % poids de zéolithe bêta.

Tableau 3 : Caractéristiques des catalyseurs (après calcination 2 heures à 500°C sous air sec)

| Catalyseur | A | B | C | H | I | J |
|---|---|---|---|---|---|---|
| $Nb_2O_5$ (% pds) | 0 | 4,7 | 4,9 | 4,6 | 4,4 | 4,7 |
| $MoO_3$ (% pds) | 14,2 | 13,6 | 13,8 | 13,8 | 13,3 | 13,9 |
| NiO (% pds) | 3,5 | 3,3 | 3,5 | 3,3 | 3,2 | 3,3 |
| $P_2O_5$ (% pds) | 0 | 0 | 0 | 0 | 5,1 | 0 |
| B2O3 (% pds) | 0 | 0 | 0 | 0 | 1,6 | 0 |
| $SiO_2$ (%pds) | 15,0 | 14,3 | 14,8 | 15,3 | 14,2 | 14,7 |
| F (% pds) | 0 | 0 | 0 | 0 | 0 | 1,11 |
| Complément à 100% composé majoritairement de $Al_2O_3$ (% pds) | 67,3 | 64,3 | 63,0 | 63 | 58,2 | 62,3 |
| Zéolite bêta (% pds) | 15,5 | 14,8 | 14,3 | 14,3 | 13,4 | 14,4 |

Exemple 5 : Préparation de catalyseurs d'hydrocraquage contenant une zéolithe bêta et du niobium (non conforme à l'invention)

Un catalyseur d'hydrocraquage contenant une zéolithe bêta et du niobium a été synthétisé. Cette préparation est réalisée en comalaxant un mélange de boehmite tabulaire ultrafine ou gel d'alumine commercialisée sous le nom SB3 par la société Condéa Chemie Gmbh, d'une zéolithe bêta telle décrite ci-dessus dans l'exemple 1, de nitrate de nickel, de pentoxyde de niobium et d'heptamolybdate d'ammonium. Pour former la pâte on utilise ces sources de manière à obtenir un catalyseur contenant 16 % poids de zéolithe bêta, 61,5% poids d'alumine, 14% poids d'oxyde de molybdène, 3,5% poids d'oxyde de nickel, et 5% poids d'oxyde de niobium. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air humide contenant 7,5% volume d'eau. On obtient le catalyseur C sous la forme d'extrudés cylindriques de 1,2 mm de diamètre dont les teneurs sont indiquées dans le tableau 1.

Exemple 6 : Préparation de catalyseurs d'hydrocraquage contenant une zéolithe bêta, une phase sulfure mixte et au moins un élément promoteur (conforme à l'invention)

Nous avons imprégné l'échantillon de catalyseur A par une solution aqueuse renfermant du l'émulsion de silicone Rhodorsil EP1 de manière à déposer environ 1,6% en masse de $SiO_2$. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé D.

Les extrudés de support contenant une zéolithe bêta de l'exemple 1 sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Le catalyseur E est ainsi obtenu.

Nous avons imprégné l'échantillon de catalyseur E par une solution aqueuse renfermant du biborate d'ammonium et de l'émulsion de silicone Rhodorsil EP1 de manière à déposer environ 1,7% masse de $B_2O_3$ et 1,5% en masse de $SiO_2$. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé F.

On prépare également un catalyseur contenant du fluor par imprégnation d'une solution d'acide fluorhydrique diluée du catalyseur A de manière à déposer environ 1 % en poids de fluor. Après séchage pendant une nuit à 120°C et calcination à 550°C pendant 2 heures sous air sec on obtient le catalyseur G.

Les catalyseurs D et F sont ensuite imprégnés par une solution aqueuse d'oxalate de niobium $Nb(HC_2O_4)_5$, d'acide oxalique et d'oxalate d'ammonium. La solution aqueuse contenant le niobium est préparée à partir de 1330 ml d'eau dans laquelle on dissout 33g d'acide oxalique, 37,2 g d'oxalate d'ammonium et 92,3 g d'oxalate de niobium. Pour préparer la solution, on dissout dans un premier temps le mélange acide oxalique et oxalate d'ammonium et lorsque la solution est limpide on chauffe la dite solution à 55°C et on ajoute l'oxalate de niobium. On complète ensuite en eau pour obtenir 1330 ml de solution. Les catalyseurs D et F sont imprégnés par la méthode dite avec excès de solution. Les 1330 ml de solution sont mis en contact avec 380 g de catalyseur. Ceci permet de déposer environ 5% poids de Nb sur le catalyseur. A bout de deux heures on récupère les extrudés. Ceux-ci sont ensuite séchés une nuit à 120°C sous un courant d'air sec. Le catalyseur H est obtenu à partir du catalyseur D. Il contient en particulier du Nb et du silicium.

Le catalyseur I est obtenu à partir du catalyseur F. Il contient en particulier du Nb, du phosphore, du silicium et du bore. On ajoute ensuite à ce catalyseur du fluor par imprégnation d'une solution d'acide fluorhydrique diluée de manière à déposer environ 1 % en poids de fluor. Après séchage pendant une nuit à 120°C sous air sec on obtient le catalyseur J. Les caractéristiques des catalyseurs H, I et J sont résumées dans le tableau 3.

Exemple 7 : Comparaison des catalyseurs sulfurés

Les catalyseurs B, C, H, I et J préparés ci-dessus ont été sulfurés dans un autoclave sous pression autogène en présence de $CS_2$. Pour 100 g de catalyseur on ajoute 20 ml de $CS_2$ dans l'autoclave, on ferme et on chauffe à 400°C pendant 10 heures. La pression interne est alors d'environ 4 MPa. Cette sulfuration est dénommée S1.

D'autres aliquots des catalyseurs B, C, H, I et J préparés ci-dessus ont été sulfurés dans un réacteur à lit fixe de catalyseur balayé par un courant de gaz contenant 15% d'$H_2$S dans l'azote à pression atmosphérique. Pour 5 g de catalyseur on fait passer 2 litres par heure du mélange et on chauffe le catalyseur à une température de 600°C pendant 6 heures. Cette sulfuration est dénommée S2.

On procède ensuite à l'analyse par la technique EXAFS au seuil K du niobium à l'aide du rayonnement synchrotron entre 18850 et 19800 eV en mesurant l'intensité absorbée par un échantillon de poudre déposé sur une bande adhésive. Elle permet de déterminer les distances interatomiques. Les distances R2 mesurées par EXAFS pour les échantillons de catalyseurs B, C, H, I et J sulfurés respectivement par la méthode S1 et par la méthode S2 sont reportées dans le tableau 4.

Quelle que soit la méthode de sulfuration, on constate nettement dans le tableau 4 que les catalyseurs contenant à la fois du niobium et du molybdène préparé selon l'invention (B, H, I et J) ont une distance métal-métal R2 de la phase sulfure inférieure à celle du catalyseur C. La valeur de R2 de 3,32 A pour le catalyseur C indique que dans ce catalyseur le niobium est sous la forme d'une phase $NbS_2$ identique à celle d'un catalyseur qui ne contiendrait que du niobium seul. La distance métal-métal R2 de 3,20 Å ou 3,21 Å intermédiaire entre la valeur de $NbS_2$ et $MoS_2$, indique la présence d'une phase mixte de niobium et de molybdène dans les catalyseurs B, H, I et J.

Tableau 4

| Catalyseur sulfuré par méthode S1 | R2 (Å) | Catalyseur sulfuré par méthode S2 | R2 (Å) |
|---|---|---|---|
| B-S1 | 3,20 | B-S2 | 3,21 |
| C-S1 | 3,32 | C-S2 | 3,32 |
| H-S1 | 3,19 | H-S2 | 3,20 |
| I-S1 | 3,21 | I-S2 | 3,20 |
| J-S1 | 3,21 | J-S2 | 3,21 |

Exemple 8 : Comparaison des catalyseurs en hydrocraquage d'un gazole sous vide à conversion partielle.

Des catalyseurs dont les préparations sont décrites dans les exemples précédents sont utilisés dans les conditions de l'hydrocraquage à pression modérée sur une charge pétrolière dont les principales caractéristiques sont les suivantes :

| | |
|---|---|
| Densité (20/4) | 0,921 |
| Soufre (% poids) | 2,46 |
| Azote (ppm poids) | 1130 |
| Distillation simulée | |
| point initial | 365°C |
| point 10 % | 430°C |
| point 50 % | 472°C |
| point 90 % | 504°C |
| point final | 539°C |
| point d'écoulement | + 39°C |

L'unité de test catalytique comprend deux réacteurs en lit fixe, à circulation ascendante de la charge ("up-flow). Dans le premier réacteur, celui dans lequel la charge passe en premier, on introduit le catalyseur de première étape d'hydrotraitement HTH548 vendu par la société Procatalyse comprenant un élément du groupe VI et un élément du groupe VIII déposés sur alumine. Dans le second réacteur, celui dans lequel la charge passe en dernier, on introduit un catalyseur d'hydrocraquage décris ci-dessus. Dans chacun des réacteurs, on introduit 40 ml de catalyseur. Les deux réacteurs fonctionnement à la même température et à la même pression. Les conditions opératoires de l'unité de test sont les suivantes :

| | |
|---|---|
| Pression totale | 5 MPa |
| Catalyseur d'hydrotraitement | 40 cm$^3$ |
| Catalyseur d'hydrocraquage | 40 cm$^3$ |
| Température | 400°C |
| Débit d'hydrogène | 20 l/h |
| Débit de charge | 40 cm$^3$/h |

Les deux catalyseurs subissent une étape de sulfuration in-situ avant réaction. Une fois la sulfuration réalisée, la charge décrite ci-dessus peut être transformée.

Les performances catalytiques sont exprimées par la conversion brute à 400°C (CB), par la sélectivité brute en distillats moyens (SB) et par les conversions en hydrodésulfuration (HDS) et en hydrodéazotation (HDN). Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380^{\text{moins}} \text{ de l'effluent}$$

La fraction 380 <sup>moins</sup> de l'effluent signifiant la partie de l'effluent bouillant au dessous de 380°C.

La sélectivité brute SB en distillats moyens est prise égale à :

$$SB = 100 \text{*poids de la fraction (150°C-380°C)/poids de la fraction 380}^{\text{moins}} \text{ de l'effluent}$$

La conversion en hydrodésulfuration HDS est prise égale à :

$$HDS = (S_{initial} - S_{effluent}) / S_{initial} * 100 = (24600 - S_{effluent}) / 24600 * 100$$

La conversion en hydrodéazotation HDN est prise égale à :

$$HDN = (N_{initial} - N_{effluent}) / N_{initial} * 100 = (1130 - N_{effluent}) / 1130 * 100$$

Dans le tableau 5 suivant, nous avons reporté la conversion brute CB à 400°C, la sélectivité brute SB, la conversion en hydrodésulfuration HDS et la conversion en hydrodéazotation HDN pour les quatre catalyseurs.

Tableau 5 Activités catalytiques des catalyseurs en hydrocraquage partiel à 400°C

| Catalyseurs NiMo | | CB (%pds) | SB (%) | HDS (%) | HDN (%) |
|---|---|---|---|---|---|
| B | Nb | 49,4 | 66,0 | 97,6 | 94,7 |
| C | Nb | 49,4 | 65,2 | 97,0 | 94,2 |
| H | NbSi | 50,0 | 65,4 | 97,8 | 95,0 |
| J | NbF | 50,7 | 65,8 | 98,7 | 96,3 |
| R | NbSi | 51,0 | 64,8 | 99,0 | 96,4 |
| M | PBSi | 50,9 | 64,1 | 99,52 | 98,9 |
| T | NbPBSi | 51,9 | 64,2 | 99,6 | 99,1 |

Les résultats du tableau 5 montrent que la présence de niobium et de promoteur (P, B, Si) dans le catalyseur contenant de la zéolithe bêta apporte une amélioration des performances en conversion, sans diminution notable de la sélectivité brute en distillats moyen. La présence d'une phase sulfure mixte (catalyseurs B, H, J) apporte également une amélioration des performances par comparaison avec celles du catalyseur C ne contenant pas cette phase.

Les catalyseurs à base de zéolithe bêta de l'invention contenant du niobium sont donc particulièrement intéressants pour l'hydrocraquage partiel de charge de type distillats sous vide contenant de l'azote et en particulier sous une pression d'hydrogène modérée.

Exemple 9 : Comparaison des catalyseurs en hydrocraquage d'un gazole sous vide à haute conversion

Des catalyseurs dont les préparations sont décrites aux exemples précédents sont utilisés dans les conditions de l'hydrocraquage à conversion élevée (60-100%). La charge pétrolière est un distillat sous vide hydrotraité dont les principales caractéristiques sont les suivantes :

| | |
|---|---|
| Densité (20/4) | 0,869 |
| Soufre (ppm poids) | 502 |
| Azote (ppm poids) | 10 |
| Distillation simulée | |
| point initial | 298°C |
| point 10 % | 369°C |
| point 50 % | 427°C |
| point 90 % | 481 °C |

Suite de tableau

point final                538°C

Cette charge a été obtenue par hydrotraitement d'un distillat sous vide sur un catalyseur HR360 vendu par la société Procatalyse comprenant un élément du groupe VI et un élément du groupe VIII déposés sur alumine.

On ajoute ensuite à cette charge 0,6% poids d'aniline et 2% poids de dimethyl-disulfure afin de simuler les pressions partielles d'HS2 et d'NH3 présente dans la deuxième étape d'hydrocraquage. La charge ainsi préparée est injectée dans l'unité de test d'hydrocraquage qui comprend un réacteur en lit fixe, à circulation ascendante de la charge ("up-flow"), dans lequel est introduit 80 ml de catalyseur. Le catalyseur est sulfuré par un mélange n-hexane/DMDS+aniline jusqu'à 320°C. Une fois la sulfuration réalisée, la charge décrite ci-dessus peut être transformée. Les conditions opératoires de l'unité de test sont les suivantes :

| | |
|---|---|
| Pression totale | 9 MPa |
| Catalyseur | 80 cm$^3$ |
| Température | 360-420°C |
| Débit d'hydrogène | 80 l/h |
| Débit de charge | 80 cm$^3$/h |

Les performances catalytiques sont exprimées par la température qui permet d'atteindre un niveau de conversion brute de 70 % et par la sélectivité brute en distillats moyen 150-380°C. Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380^{\text{moins}} \text{ de l'effluent}$$

La sélectivité brute SB en distillat moyen est prise égale à :

$$SB = 100^* \text{poids de la fraction } (150°C\text{-}380°C)/\text{poids de la fraction } 380^{\text{moins}} \text{ de l'effluent}$$

La température de réaction est fixée de façon à atteindre une conversion brute CB égale à 70% poids. Dans le tableau 6 suivant, nous avons reporté la température de réaction et la sélectivité brute pour les catalyseurs décrits précédemment.

Tableau 6 : Activités catalytiques des catalyseurs en hydrocraquage haute conversion (70%)

| Catalyseurs NiMo | | T(°C) | SB (%) |
|---|---|---|---|
| A | - | 371 | 49,2 |
| B | Nb | 369 | 51,7 |
| C | Nb | 371 | 49,9 |
| J | NbF | 365 | 53,7 |
| K | - | 369 | 51,2 |
| T | NbPBSi | 364 | 54,1 |

La présence de niobium et de promoteur (P, B, Si) dans les catalyseurs contenant la zéolithe bêta permet d'améliorer l'activité en conversion, ce qui se traduit par une diminution de la température de réaction nécessaire pour atteindre 70% de conversion et permet d'obtenir une meilleure sélectivité brute en distillats moyens.

La comparaison des catalyseurs B et C montre que la présence d'une phase sulfure mixte de molybdène et niobium dans le catalyseur contenant la zéolithe bêta permet d'améliorer sensiblement la sélectivité.

Les catalyseurs selon l'invention sont donc particulièrement intéressants pour l'hydrocraquage à haute conversion de charge de type distillats sous vide, notamment à une pression d'hydrogène modérée.

**Revendications**

1. Catalyseur comprenant au moins une zéolithe bêta, au moins une matrice choisie dans le groupe formé par les matrices minérales, au moins un élément du groupe VIII, et au moins un phase sulfure mixte comprenant du soufre, du niobium et au moins un élément du groupe VIB, éventuellement au moins un élément choisi dans le groupe formé par le silicium, le bore ou le phosphore, et éventuellement au moins un élément du groupe VIIA, ladite phase sulfure mixte ayant la formule générale approchée suivante :

$$A_x B_{1-x} S_y$$

où :

x est un nombre compris entre 0,001 et 0,999,
y est un nombre compris entre 0,1 et 8,
A est le niobium,
B est l'élément choisi dans le groupe VIB.

2. Catalyseur selon la revendication 1 dans lequel la zéolithe bêta présente un rapport atomique global silicium/ aluminium compris entre 10 et 200.

3. Catalyseur selon l'une des revendications 1 ou 2 dans lequel l'élément du groupe VIB est le molybdène ou le tungstène et l'élément du groupe VIII est le fer, le cobalt ou le nickel.

4. Catalyseur selon la revendication 1 renfermant en % poids par rapport à la masse totale du catalyseur :

- 0,1 à 99,8% d'au moins une zéolithe bêta.
- 0,1 à 60% de niobium,
- 0,1 à 99% d'au moins une matrice minérale poreuse amorphe ou mal cristallisée de type oxyde
- de 0,1 à 20% d'au moins un élément promoteur choisi dans le groupe constitué par le bore, le phosphore, et le silicium, non compris le silicium éventuellement contenu dans la zéolithe,
- de 0,1 à 50% d'éléments choisis parmi les éléments du groupe VIB et du groupe VIII, et
- de 0 à 20% d'au moins un élément choisi dans le groupe VIIA.

5. Catalyseur selon l'une des revendications 1 à 4 dans lequel la matrice est l'alumine.

6. Catalyseur selon l'une des revendications 1 à 5 comprenant en outre au moins un élément choisi dans le groupe formé par le silicium, le bore ou le phosphore.

7. Catalyseur selon l'une des revendications 1 à 6 comprenant en outre au moins un élément du groupe VIIA.

8. Catalyseur selon la revendication 1 renfermant en % poids par rapport à la masse totale du catalyseur :

- 0,1 à 99,9 % d'au moins une matrice,
- 0,1 à 99,8% d'au moins une zéolithe bêta, dont le paramètre de maille est compris entre 2,424 nm et 2,455 nm et dont le rapport molaire $SiO_2/Al_2O_3$ global est supérieur à 8.
- 0,1 à 99,5 % d'au moins une phase sulfure mixte de niobium et d'au moins un élément du groupe VIB.
- de 0,1 à 20 % d'au moins un métal du groupe VIII,

le catalyseur pouvant renfermer en outre :

- de 0 à 20 % d'au moins un élément choisi dans le groupe formé par le bore, le phosphore et le silicium, et
- de 0 à 15 % d'au moins un élément choisi dans le groupe VIIA.

9. Utilisation du catalyseur selon l'une des revendications 1 à 8 dans un procédé d'hydrocraquage de charges hydrocarbonées.

10. Utilisation selon la revendication 9 dans laquelle la température est supérieure à 200°C, la pression supérieure à 0,1 MPa, la quantité d'hydrogène au minimum de 50 litres d'hydrogène par litre de charge, et la vitesse volumétrique horaire comprise entre 0,1 et 20 volume de charge par volume de catalyseur et par heure.

11. Utilisation selon la revendication 9 dans lequelle le niveau de conversion est inférieur à 55%, la température est supérieure à 230°C, la pression supérieure à 2 MPa et inférieure à 12MPa, la quantité d'hydrogène au minimum de 100 litres d'hydrogène par litre de charge, et la vitesse volumétrique horaire comprise entre 0,15 et 10 volume de charge par volume de catalyseur et par heure.

12. Utilisation selon la revendication 9 dans lequel la conversion est supérieure à 55%, la température est supérieure à 230°C, la pression supérieure à 5 MPa, la quantité d'hydrogène au minimum de 100 litres d'hydrogène par litre de charge, et la vitesse volumétrique horaire comprise entre 0,15 et 10 volume de charge par volume de catalyseur et par heure.

13. Utilisation selon l'une des revendications 9 à 12 dans lequel une étape d'hydrotraitement est effectuée, à une température comprise entre 350°C et 460°C, une pression d'au moins 2 MPa, avec une quantité d'hydrogène d'au moins 100 litres d'hydrogène par litre de charge, une vitesse volumétrique horaire comprise entre 0,1 et 5 volume de charge par volume de catalyseur et par heure, et préalablement à l'étape d'hydrocraquage.

**Claims**

1. A catalyst comprising at least one beta zeolite, at least one matrix selected from the group formed by mineral matrices, at least one group VIII element, and at least one mixed sulphide phase comprising sulphur, niobium, and at least one group VIB element, and optionally at least one element selected from the group formed by silicon, boron and phosphorous, and optionally at least one group VIIA element, wherein said mixed sulphide phase has the following approximate general formula:

$$A_xB_{1-x}S_y$$

where:

x is a number in the range 0.001 to 0.999,
y is a number in the range 0.1 to 8,
A is niobium,
B is an element selected from group VIB.

2. A catalyst according to claim 1, wherein the overall silicon/aluminium atomic ratio of the beta zeolite is in the range 10 to 200.

3. A catalyst according to any one of claims 1 or 2, wherein the group VIB element is molybdenum or tungsten and the group VIII element is iron, cobalt or nickel.

4. A catalyst according to claim 1, comprising, in weight % with respect to the total catalyst mass:

• 0.1 to 99.8% of at least one beta zeolite,
• 0.1 to 60% of niobium,
• 0.1 to 99% of at least one porous amorphous or low crystallinity oxide type mineral matrix,
• 0.1 to 20% of at least one promoter element selected from the group formed by boron, phosphorous and silicon, not including the silica which may be present in the zeolite,
• 0.1 to 50% of elements selected from group VIB and group VIII elements, and
• 0 to 20% of at least one element selected from group VIIA.

5. A catalyst according to any one of claims 1 to 4, wherein the matrix is alumina.

6. A catalyst according to any one of claims 1 to 5, further comprising at least one element selected from the group formed by silicon, boron and phosphorous.

7. A catalyst according to any one of claims 1 to 6, further comprising at least one group VIIA element.

**8.** A catalyst according to claim 1, comprising, in weight % with respect to the total catalyst mass:

• 0.1 to 99.9% of at least one matrix,
• 0.1 to 99.8% of at least one beta zeolite with a lattice parameter in the range 2.424 nm and 2.455 nm and with an overall $SiO_2/Al_2O_3$ molar ratio of more than 8;
• 0.1 to 99.5% of at least one mixed sulphide phase of niobium and at least one group VIB element;
• 0.1% to 20% of at least one group VIII element;

the catalyst possibly also comprising:

• 0 to 20% of at least one element selected from the group formed by boron, phosphorous and silicon, and
• 0 to 15% of at least one element selected from group VIIA.

**9.** Use of a catalyst according to any one of claims 1 to 8 in a process for hydrocracking hydrocarbon feeds.

**10.** Use according to claim 9 wherein the temperature is over 200°C, the pressure is over 0.1 MPa, the quantity of hydrogen is a minimum of 50 litres of hydrogen per litre of feed, and the hourly space velocity is in the range 0.1 to 20 volumes of feed per volume of catalyst per hour.

**11.** Use according to claim 9 wherein the degree of conversion is less than 55%, wherein the temperature is over 230°C, the pressure is over 2 MPa and less than 12 MPa, the quantity of hydrogen is a minimum of 100 litres of hydrogen per litre of feed, and the hourly space velocity is in the range 0.15 to 10 volumes of feed per volume of catalyst per hour.

**12.** Use according to claim 9 wherein the degree of conversion is over 55%, the temperature is over 230°C, the pressure is over 5 MPa, the quantity of hydrogen is a minimum of 100 litres of hydrogen per litre of feed, and the hourly space velocity is in the range 0.15 to 10 volumes of feed per volume of catalyst per hour.

**13.** Use according to any one of claims 9 to 12, wherein hydrotreatment is carried out, at a temperature in the range 350°C to 460°C, a pressure of at least 2 MPa, with a quantity of hydrogen of at least 100 litres of hydrogen per litre of feed, and an hourly space velocity in the range 0.1 to 5 volumes of feed per volume of catalyst per hour, this step being prior to the hydrocracking step.

**Patentansprüche**

**1.** Katalysator, der wenigstens einen Beta-Zeolithen, wenigstens eine Matrix, gewählt aus der Gruppe, die gebildet wird durch die mineralischen Matrizes, wenigstens ein Element der Gruppe VIII und wenigstens eine gemischte Sulfidphase, die Schwefel umfasst, Niob und wenigstens ein Element der Gruppe VIB, gegebenenfalls wenigstens ein Element, das gewählt ist aus der Gruppe, die gebildet wird durch Silizium, Bor oder Phosphor, und gegebenenfalls wenigstens ein Element der Gruppe VIIA umfasst, wobei die gemischte Sulfidphase die folgende allgemeine angenäherte Formel hat:

$$A_x B_{1-x} S_y$$

worin:

x eine Zahl zwischen 0,001 und 0,999 ist,
y eine Zahl zwischen 0,1 und 8 ist,
A Niob ist,
B das Element ist, das aus der Gruppe VI gewählt ist.

**2.** Katalysator nach Anspruch 1, in welchem der Beta-Zeolith ein Gesamtatomverhältnis Silizium/ Aluminium zwischen 10 und 200 aufweist.

**3.** Katalysator nach einem der Ansprüche 1 oder 2, bei dem das Element der Gruppe VIB Molybdän oder Wolfram ist und das Element der Gruppe VIII Eisen, Kobalt oder Nickel ist.

**4.** Katalysator nach Anspruch 1, umfassend in Gew.-% im Verhältnis zur Gesamtmasse des Katalysators:

- 0,1 bis 99,8% wenigstens eines Beta-Zeolithen.
- 0,1 bis 60% Niob,
- 0,1 bis 99% wenigstens einer mineralischen porösen amorphen oder schlecht kristallisierten Matrix vom Oxidtyp,
- 0,1 bis 20% wenigstens eines Promotorelements, gewählt aus der Gruppe, die besteht aus Bor, Phosphor und Silizium, nicht eingeschlossen Silizium, das eventuell in dem Zeolithen enthalten ist,
- 0,1 bis 50% an Elementen, die gewählt sind unter den Elementen der Gruppe VIB und der Gruppe VIII, und
- 0 bis 20% wenigstens eines Elements, das gewählt ist aus der Gruppe VIIA.

5. Katalysator nach einem der Ansprüche 1 bis 4, bei dem die Matrix Aluminiumoxid ist.

6. Katalysator nach einem der Ansprüche 1 bis 5, außerdem wenigstens ein Element umfassend, das gewählt ist aus der Gruppe, die gebildet wird durch Silizium, Bor oder Phosphor.

7. Katalysator nach einem der Ansprüche 1 bis 6, außerdem wenigstens ein Element der Gruppe VIIA umfassend.

8. Katalysator nach Anspruch 1, der in Gew.-% im Verhältnis zur Gesamtmasse des Katalysators umfasst:

- 0,1 bis 99,9% wenigstens einer Matrix,
- 0,1 bis 99,8% wenigstens eines Beta-Zeolithen, dessen Elementarzellparameter zwischen 2,424 nm und 2,455 nm liegt und dessen Molverhältnis $SiO_2$/ $Al_2O_3$ insgesamt über 8 ist.
- 0,1 bis 99,5% wenigstens einer gemischten Sulfidphase von Niob und wenigstens eines Elements der Gruppe VIB.
- 0,1 bis 20% wenigstens eines Metalls der Gruppe VIII,

wobei der Katalysator außerdem einschließen kann:

- 0 bis 20% wenigstens eines Elements, gewählt aus der Gruppe, die gebildet wird durch Bor, Phosphor und Silizium, und
- 0 bis 15% wenigstens eines Elements, das gewählt ist aus der Gruppe VIIA.

9. Verwendung des Katalysators nach einem der Ansprüche 1 bis 8 in einem Verfahren zum Hydrokracken von Kohlenwasserstoffbeschickungen.

10. Verwendung nach Anspruch 9, bei der die Temperatur über 200°C liegt, der Druck über 0,1 MPa, die minimale Wasserstoffmenge 50 Liter Wasserstoff pro Liter Beschickung und die stündliche Volumengeschwindigkeit zwischen 0,1 und 20 Beschickungsvolumen pro Katalysatorvolumen und pro Stunde liegt.

11. Verwendung nach Anspruch 9, bei dem das Umwandlungsniveau unter 55% liegt, die Temperatur über 230°C ist, der Druck über 2 MPa und unter 12 MPa liegt, die Wasserstoffmenge mindestens 100 Liter Wasserstoff pro Liter Beschickung und die stündliche Volumengeschwindigkeit zwischen 0,15 und 10 Beschickungsvolumen pro Katalysatorvolumen und pro Stunde liegt.

12. Verwendung nach Anspruch 9, bei dem das Umwandlungsniveau unter 55% liegt, die Temperatur über 230°C ist, der Druck über 5 MPa liegt, die Wasserstoffmenge mindestens 100 Liter Wasserstoff pro Liter Beschickung und die stündliche Volumengeschwindigkeit zwischen 0,15 und 10 Beschickungsvolumen pro Katalysatorvolumen und pro Stunde liegt.

13. Verwendung nach einem der Ansprüche 9 bis 12, bei dem eine Hydrotreatmentstufe durchgeführt wird bei einer Temperatur zwischen 350°C und 460°C, einem Druck von wenigstens 2 MPa mit einer Wasserstoffmenge von wenigstens 100 Liter Wasserstoff pro Liter Beschickung, einer stündlichen Volumengeschwindigkeit zwischen 0,1 und 5 Beschikkungsvolumen pro Katalysatorvolumen und pro Stunde und vor der Hydrokrackstufe.